# EUROPÄISCHE PATENTANMELDUNG

(11) **EP 3 034 295 A1**
(43) Veröffentlichungstag der Anmeldung: **22.06.2016**
(21) Anmeldenummer: 14198932.7
(22) Anmeldetag: 18.12.2014
(51) Int. Cl.: B32B 17/10, C03C 27/12, H05B 3/84, B23K 26/36, C03B 33/02

(54) **VERBUNDSCHEIBE MIT KORROSIONSGESCHÜTZTER FUNKTIONELLER BESCHICHTUNG**

(71) Anmelder: Saint-Gobain Glass France, 92400 Courbevoie (FR)
(72) Erfinder: Schulz, Valentin, 52382 Niederzier (DE); Cucchi, Irène, 59000 Lille (FR)
(74) Vertreter: Obermair, Christian Egbert

(57) **Zusammenfassung**

Die vorliegende Erfindung betrifft eine Verbundscheibe (100) mit funktioneller Beschichtung, mindestens umfassend:
- eine erste Scheibe (1) mit einer Oberfläche (III), eine zweite Scheibe (2) mit einer Oberfläche (II) und eine thermoplastische Zwischenschicht (4), wobei die Oberfläche (III) der ersten Scheibe (1) durch die thermoplastische Zwischenschicht (4) mit der Oberfläche (II) der zweiten Scheibe (2) flächig verbunden ist,
- mindestens eine funktionelle Beschichtung (3), die zumindest auf einem Teil der innenliegenden Oberfläche (III) der ersten Scheibe (1) aufgebracht ist und
- mindestens einen beschichtungsfreien Bereich (9.1,9.2) der einen inneren Bereich (11) der funktionellen Beschichtung (3) vollständig umgibt und den inneren Bereich (11) von mindestens einem äußeren Bereich (10.1,10.2) der funktionellen Beschichtung (3) abtrennt.

## Beschreibung

Die Erfindung betrifft eine Verbundscheibe mit korrosionsgeschützter funktioneller Beschichtung, ein Verfahren zu deren Herstellung und deren Verwendung.

Verbundscheiben aus zwei oder mehr gläsernen oder polymeren Scheiben werden in vielfältiger Weise in Gebäuden, Möbeln oder in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und/oder Dachscheibe eingesetzt.

Oftmals sind auf einzelnen Seiten der Scheiben eine oder mehrere funktionelle Beschichtungen angeordnet, die beispielsweise infrarotreflektierende Eigenschaften, Antireflex-Eigenschaften oder Low-E-Eigenschaften aufweisen oder durch Anlegen einer Spannung elektrisch beheizbar sind. So sind Verbundscheiben bekannt, die auf einer innenseitigen Oberfläche einer der Einzelscheiben eine elektrische Heizschicht aus einer transparenten, elektrisch leitfähigen Beschichtung aufweisen. Durch eine externe Spannungsquelle kann ein elektrischer Strom durch die elektrisch leitfähige Beschichtung geleitet werden, der die Beschichtung und damit die Scheibe erwärmt.

WO 2003/024155 A2, US 2007/0082219 A1, US 2007/0020465 A1 und WO2012/052315 A1 offenbaren beispielsweise eine solche beheizbare, elektrisch leitfähige Beschichtung auf Metallbasis und insbesondere auf der Basis eines Schichtaufbaus von einer oder mehreren silberhaltigen Lagen.

Derartige funktionelle Beschichtungen und insbesondere metallbasierte und elektrisch leitfähige Beschichtungen sind sehr korrosionsanfällig und müssen daher hermetisch abgeschlossen und vor Feuchtigkeit geschützt werden. Dazu wird eine innenliegende funktionelle Beschichtung entlang eines umlaufenden rahmenförmigen Bereichs der Verbundscheibe entschichtet. Die Breite des umlaufenden rahmenförmigen Bereichs beträgt üblicherweise von 5 mm bis 20 mm und endet an der Seitenkante der Verbundscheibe. Üblicherweise erfolgt die Entschichtung in einem aufwendigen und lange dauernden Schritt durch mechanische Abrasion, beispielsweise durch Schleifen mit einer Schleifscheibe. Der beschichtungsfreie Bereich wird im Innern der Verbundscheibe durch die thermoplastische Zwischenschicht oder einen Acrylatkleber als Dampfdiffusionssperre hermetisch versiegelt. Durch die Dampfdiffusionssperre wird die korrosionsempfindliche funktionelle Beschichtung vor Feuchtigkeit und Luftsauerstoff geschützt. Ist die Verbundscheibe als Fahrzeugscheibe, beispielsweise als elektrisch beheizbare Windschutzscheibe vorgesehen, so bewirkt der umlaufende beschichtungsfreie Bereich zudem eine elektrische Isolierung zwischen der spannungsführenden Beschichtung und der Fahrzeugkarosserie.

Die Aufgabe der vorliegenden Erfindung besteht darin, eine Verbundscheibe mit funktioneller Beschichtung bereitzustellen, die einen hohen Korrosionsschutz aufweist und gleichzeitig einfach und kostengünstig herstellbar ist.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe mit funktioneller Beschichtung umfasst zumindest die folgenden Merkmale:
- eine erste Scheibe mit einer Oberfläche III, eine zweite Scheibe mit einer Oberfläche II und eine thermoplastische Zwischenschicht, wobei die Oberfläche III der ersten Scheibe durch die thermoplastische Zwischenschicht mit der Oberfläche II der zweiten Scheibe flächig verbunden ist.
- mindestens eine funktionelle Beschichtung, die zumindest auf einem Teil der innenliegenden Oberfläche III der ersten Scheibe aufgebracht ist,
- mindestens einen rahmenförmig umlaufenden beschichtungsfreien Bereich der einen inneren Bereich der funktionellen Beschichtung vollständig umgibt und den inneren Bereich von mindestens einem äußeren Bereich der funktionellen Beschichtung abtrennt.

Dies hat zur Folge, dass der innere Bereich nicht an eine Seitenkante der ersten Scheibe grenzt.

Vollständig Abtrennen bedeutet hier, dass es keine stoffliche Verbindung des Materials der funktionellen Beschichtung zwischen dem inneren Bereich und dem äußeren Bereich beziehungsweise den äußeren Bereichen gibt. Die beschichtungsfreien Bereiche und die funktionelle Beschichtung im inneren Bereich werden während des Laminiervorgangs zur Herstellung der Verbundscheibe hermetisch durch die Zwischenschicht versiegelt. So kann Feuchtigkeit aus der Umgebung der Verbundscheibe nicht mehr zum inneren Bereich der funktionellen Beschichtung gelangen und die funktionelle Beschichtung im inneren Bereich wird wirkungsvoll vor Korrosion geschützt.

In einer vorteilhaften Ausgestaltung der erfindungsgemäßen Verbundscheibe sind der innere Bereich und der beschichtungsfreie Bereich vollständig innerhalb genau eines äußeren Bereichs der funktionellen Beschichtung angeordnet. Dies bedeutet, dass der beschichtungsfreie Bereich vollständig von einem rahmenförmig umlaufenden Bereich der funktionellen Beschichtung des äußeren Bereichs umgeben ist.

In einer alternativen Ausgestaltung der erfindungsgemäßen Verbundscheibe umgibt oder umrandet der äußere Bereich nur einen Teil des beschichtungsfreien Bereichs der den inneren Bereich umgibt, bevorzugt entlang nur einer, zweier oder dreier Seitenkanten der ersten Scheibe.

In einer vorteilhaften Ausgestaltung der erfindungsgemäßen Verbundscheibe ist der beschichtungsfreie Bereich streifenförmig und im Wesentlichen parallel zu den Seitenkanten der ersten Scheibe angeordnet. Dies hat besondere prozesstechnische Vorteile, da das Entschichtungswerkzeug parallel zur Seitenkante und entlang der gesamten ersten Scheibe geführt werden kann. Besonders vorteilhaft ist dies, wenn gleichzeitig ein weiteres Werkzeug mitgeführt wird, beispielsweise eine Trennscheibe oder eine Diamantspitze, das es erlaubt die erste Scheibe aus einem größeren Basisglas herauszuschneiden oder anzuritzen, um es in einem weiteren Verfahrensschritt abzutrennen. Die sichere stoffliche Trennung des inneren Bereichs von der Umgebung der Verbundscheibe wird durch sich überkreuzenden beschichtungsfreien Bereiche in den Eckbereichen der ersten Scheibe sichergestellt.

Dies bedeutet, dass der beschichtungsfreie Bereich im Wesentlichen vollständig von einem rahmenförmig umlaufenden Bereich der funktionellen Beschichtung des äußeren Bereichs umgeben ist. Hinzukommen Verlängerungselemente der streifenförmigen beschichtungsfreien Bereich, die den rahmenförmig umlaufenden beschichtungsfreien Bereich innerhalb des äußeren Bereichs mit den Seitenkanten der ersten Scheibe verbinden. Da auch diese Verlängerungselemente in der fertigen Verbundscheibe hermetisch durch die Zwischenschicht versiegelt werden, hat dies keinen Einfluss auf die Korrosionsbeständigkeit der funktionellen Beschichtung.

In einer weiteren vorteilhaften Ausgestaltung der erfindungsgemäßen Verbundscheibe beträgt die Breite b eines der äußeren Bereiches von 0,5 mm bis 30 mm und bevorzugt von 3 mm bis 11 mm. Die Breite ist hier definiert als die Dimension orthogonal zum Rand des inneren Bereichs. Derartige Breiten b sind besonders vorteilhaften, da sie einerseits einen sicheren Korrosionsschutz ermöglichen und andererseits durch einen Schwarz- oder Dekordruck oder durch die Karosserie verdeckt werden können.

In einer vorteilhaften Ausgestaltung der erfindungsgemäßen Verbundscheibe ist die Fläche des inneren Bereichs größer oder gleich 70%, bevorzugt größer oder gleich 90% der Fläche der funktionellen Beschichtung auf der Oberfläche III der ersten Scheibe.

In einer weiteren vorteilhaften Ausgestaltung der erfindungsgemäßen Verbundscheibe ist ein erster beschichtungsfreier Bereich vollständig von einem zweiten beschichtungsfreien Bereich geben. Der äußere Bereich mit funktioneller Beschichtung ist also zwischen dem ersten und dem zweiten beschichtungsfreien Bereich angeordnet. Besonders bevorzugt ist der zweite beschichtungsfreie Bereich vollständig von einem dritten beschichtungsfreien Bereich umgeben. Das heißt, dass ein weiterer, zweiter äußerer Bereich mit einer funktionellen Beschichtung zwischen dem zweiten und dem dritten beschichtungsfreien Bereich angeordnet. Durch einen derartigen zweiten beziehungsweise dritten beschichtungsfreien Bereich kann ein besonders guter Feuchtigkeitsschutz und damit ein besonders guter Korrosionsschutz erzielt werden.

In einer weiteren vorteilhaften Ausgestaltung der erfindungsgemäßen Verbundscheibe beträgt der maximale Abstand des inneren Bereichs von der Seitenkante der ersten Scheibe 50 mm und bevorzugt 30 mm, außer der innere Bereich ist im Bereich eines Sensorfensters oder Kommunikationsfenster zusätzlich entschichtet. In einer besonders vorteilhaften Ausgestaltung der erfindungsgemäßen Verbundscheibe umgibt der äußere Bereich den inneren Bereich zu mehr als 70% und bevorzugt zu mehr als 90% der Länge des Umfangs des inneren Bereichs.

In einer weiteren vorteilhaften Ausgestaltung der erfindungsgemäßen Verbundscheibe beträgt die Breite d des beschichtungsfreien Bereichs von 30 µm bis 5 mm, bevorzugt von 100 µm bis 2 mm und besonders bevorzugt von 250 µm bis 1,5 mm. Dies hat den besonderen Vorteil, dass beschichtungsfreie Bereiche mit einer derart geringen Breite sehr schnell und einfach hergestellt werden können. In einer besonders vorteilhaften Ausgestaltung der erfindungsgemäßen Verbundscheibe beträgt die Breite d des beschichtungsfreien Bereichs von 250 µm bis 500 µm. Dies hat den besonderen Vorteil, dass derartige Bereiche besonders schnell hergestellt werden können, insbesondere durch Laserabtragung.

Die beschichtungsfreien Bereiche können durch jede geeignete technische Methode hergestellt werden. Beispielsweise durch Maskentechniken oder Abschattung bei der Abscheidung der funktionellen Beschichtung. Alternativ können die beschichtungsfreien Bereiche durch Entschichtung einer flächig abgeschiedenen funktionellen Beschichtung hergestellt werden. Dies kann beispielsweise durch chemisches oder physikalisches Ätzen oder mechanisch-abrasive Verfahren wie Schleifen oder Fräsen erfolgen. Besonders bevorzugt ist eine Entschichtung durch Laserabtragung. Diese hat den besonderen Vorteil, dass Sie kostengünstig, schnell und präzise durchgeführt werden kann. Die Laserabtragung ist wegen der Präzision auch besonders für schmale Breiten d geeignet.

Als erste und zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird eine Scheibe verstanden, die eine Transmission im sichtbaren Spektral-bereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der einzelnen Scheiben kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere einzelne Scheiben werden durch mindestens eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmethacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Zwischenschichten mit schlechteren Klebeeigenschaften können auch zwischen Zwischenschichten mit besseren Klebeeigenschaften angeordnet und laminiert sein, beispielsweise PVB/PET/PVB. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer thermoplastischen Zwischenschicht und einer zweiten Scheibe ist die funktionelle Beschichtung direkt auf die erste Scheibe aufgebracht. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die funktionelle Beschichtung ist auf der innenseitigen Oberfläche der ersten Scheibe aufgebracht. Natürlich kann auch auf der innenseitigen Oberfläche der zweiten Scheibe eine weitere funktionelle Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Im Sinne der Erfindung bedeutet "auf der ersten Scheibe aufgebracht" auch, dass die funktionelle Beschichtung auf einer Trägerfolie, beispielsweise einer PET-Folie angeordnet sein, die über eine Klebefolie, beispielsweise eine PVB-Folie mit der innenliegenden Oberfläche der ersten Folie verbunden ist.

Die funktionelle Beschichtung ist bevorzugt transparent. Transparent bedeutet hier durchlässig für elektromagnetische Strahlung, vorzugsweise elektromagnetische Strahlung einer Wellenlänge von 300 nm bis 1.300 nm und insbesondere für sichtbares Licht. Als transparent im Sinne der Erfindung wird somit eine Verbundscheibe mit funktioneller Beschichtung verstanden, die eine Transmission im sichtbaren Spektral-bereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Wird die funktionelle Beschichtung zur elektrischen Beheizung der Verbundscheibe verwendet, so ist sie als elektrisch leitfähige funktionelle Beschichtung und bevorzugt als transparente, elektrisch leitfähige funktionelle Beschichtung ausgebildet.

Erfindungsgemäße elektrisch leitfähige funktionelle Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der funktionellen Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzel-schichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete funktionelle Beschichtungen enthalten bevorzugt Indium-Zinnoxid (ITO), fluordotiertes Zinnoxid (SnO₂:F) oder aluminiumdotiertes Zinkoxid (ZnO:Al).

Eine als elektrische Heizschicht verwendete funktionelle Beschichtung kann prinzipiell jede Beschichtung sein, die elektrisch kontaktiert werden kann. Soll die erfindungsgemäße Scheibe die Durchsicht ermöglichen, wie es beispielsweise bei Scheiben im Fensterbereich der Fall ist, so ist die funktionelle Beschichtung bevorzugt transparent.

In einer vorteilhaften Ausgestaltung ist die funktionelle Beschichtung eine Schicht oder ein Schichtaufbau mehrere Einzelschichten mit einer Gesamtdicke von kleiner oder gleich 2 µm, besonders bevorzugt kleiner oder gleich 1 µm.

Eine vorteilhafte erfindungsgemäße funktionelle Beschichtung, die als elektrische Heizschicht verwendet wird, weist einen Flächenwiderstand von 0,4 Ohm/Quadrat bis 10 Ohm/Quadrat auf. In einer besonders bevorzugten Ausgestaltung weist die erfindungsgemäße funktionelle Beschichtung einen Flächenwiderstand von 0,5 Ohm/Quadrat bis 1 Ohm/Quadrat auf. Beschichtungen mit derartigen Flächen-widerständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

In einer vorteilhaften Ausgestaltung weist die erfindungsgemäße Verbundscheibe mindestens zwei zum Anschluss an eine Spannungsquelle vorgesehene Sammelleiter auf, die mit einer elektrisch leitfähigen funktionellen Beschichtung und bevorzugt mit einer transparenten, elektrisch leitfähigen funktionellen Beschichtung so verbunden sind, dass zwischen den Sammelleitern ein Strompfad für einen Heizstrom geformt ist.

Die Sammelleiter sind bevorzugt entlang der oberen und unteren Seitenkante des inneren Bereichs der elektrisch leitfähigen funktionellen Beschichtung angeordnet. Die Länge des Sammelleiters ist typischerweise im Wesentlichen gleich der Länge des inneren Bereichs, kann aber auch kleiner sein. Es können auch mehr als zwei Sammelleiter auf der elektrisch leitfähigen funktionellen Beschichtung angeordnet sein, bevorzugt im Randbereich entlang zweier gegenüberliegenden Seitenkanten des inneren Bereichs. Es können auch mehr als zwei Sammelleiter auf der funktionelle Beschichtung angeordnet sein, beispielsweise um zwei oder mehrere unabhängige Heizfelder in einer funktionellen Beschichtung auszubilden oder wenn der Sammelleiter durch eine oder mehrere unbeschichtete Zonen unterbrochen oder versetzt ist.

In einer vorteilhaften Ausgestaltung ist der erfindungsgemäße Sammelleiter als aufgedruckte und eingebrannte leitfähige Struktur ausgebildet. Der aufgedruckte Sammelleiter enthält bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metall-partikel und/oder Kohlenstoff und insbesondere Edelmetallpartikel wie Silberpartikel.

Die elektrische Leitfähigkeit wird bevorzugt durch die elektrisch leitenden Partikel erzielt. Die Partikel können sich in einer organischen und / oder anorganischen Matrix wie Pasten oder Tinten befinden, bevorzugt als Druckpaste mit Glasfritten.

Die Breite des ersten und zweiten Sammelleiters beträgt bevorzugt von 2 mm bis 30 mm, besonders bevorzugt von 4 mm bis 20 mm und insbesondere von 10 mm bis 20 mm. Dünnere Sammelleiter führen zu einen zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz. Des Weiteren führen sie zu einer zu großen und unästhetischen Einschränkung des Durchsichtbereichs der Scheibe. Die Länge des Sammelleiters richtet sich nach der Ausdehnung der elektrischen Heizschicht. Bei einem Sammelleiter, der typischerweise in Form eines Streifens ausgebildet ist, wird die längere seiner Dimensionen als Länge und die weniger lange seiner Dimensionen als Breite bezeichnet. Die dritten oder zusätzlichen Sammelleiter können auch dünner ausgestaltet sein, bevorzugt von 0,6 mm bis 5 mm.

Die Schichtdicke des aufgedruckten Sammelleiters beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Der spezifische Widerstand ρₐ der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die funktionelle Beschichtung kann sich über die gesamte Oberfläche der ersten Scheibe erstrecken. Die funktionelle Beschichtung kann sich alternativ aber auch nur über einen Teil der Oberfläche der ersten Scheibe erstrecken. Die funktionelle Beschichtung erstreckt sich bevorzugt über mindestens 50%, besonders bevorzugt über mindestens 70% und ganz besonders bevorzugt über mindestens 90% der innenseitigen Oberfläche der ersten Scheibe. Die funktionelle Beschichtung kann im inneren Bereich und/oder im äußeren Bereich eine oder mehrere unbeschichtete Zonen aufweisen. Diese Zonen können für elektromagnetische Strahlung durchlässig sein und sind beispielsweise als Datenübertragungsfenster oder Kommunikationsfenster bekannt.

Die elektrische Zuleitung ist bevorzugt als flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die Erfindung umfasst weiter ein Verfahren zur Herstellung einer Verbundscheibe mit funktioneller Beschichtung, mindestens umfassend:
(a) Aufbringen einer funktionellen Beschichtung auf mindestens einen Teil einer Oberfläche (III) einer ersten Scheibe,
(b) Einbringen mindestens eines rahmenförmig umlaufenden beschichtungsfreien Bereichs in die funktionelle Beschichtung, der einen inneren Bereich vollständig umgibt, bevorzugt durch Laserabtragung, wobei der innere Bereich der funktionellen Beschichtung vollständig von mindestens einem äußeren Bereich der funktionellen Beschichtung abgetrennt wird,
(c) Verbinden der Oberfläche (III) der ersten Scheibe mit der funktionellen Beschichtung über eine thermoplastische Zwischenschicht mit einer Oberfläche (II) einer zweiten Scheibe.

In einer besonders vorteilhaften Ausführungsform des erfindungsgemäßen Verfahrens wird im Schritt (b) die erste Scheibe aus einer Basisscheibe herausgeschnitten oder zum Abtrennen angeritzt. Dies ist besonders vorteilhaft, da durch die gleichzeitig stattfindende Entschichtung des beschichtungsfreien Bereichs Produktionszeit und damit Kosten eingespart werden können.

Das Aufbringen der funktionellen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die funktionelle Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der funktionellen Beschichtung auf eine Temperatur von mindestens 200°C, bevorzugt mindestens 300°C erwärmt. Die Temperaturbehandlung kann der Erhöhung der Transmission und / oder der Verringerung des Flächenwiderstands der funktionellen Beschichtung dienen.

Die erste Scheibe kann nach Verfahrensschritt (a) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die funktionelle Beschichtung nicht dazu geeignet ist, einen Biegeprozess ohne Beschädigungen zu überstehen.

Die Entschichtung einzelner beschichtungsfreier Bereiche in der funktionellen Beschichtung in Verfahrensschritt (b) erfolgt vorzugsweise durch einen Laserstrahl. Verfahren zum Strukturieren dünner Metallfilme sind beispielsweise aus EP 2 200 097 A1 oder EP 2 139 049 A1 bekannt.

Das Einbringen von Energie zum Entschichten des beschichtungsfreien Bereichs kann erfindungsgemäß mit jedem geeigneten Laser erfolgen. Besonders bevorzugt werden YAG-Laser verwendet, insbesondere Nd:YAG-Laser (Neodym-dotierter Yttrium-Aluminium-Granat-Festkörperlaser) mit einer Wellenlänge im Bereich von 1047 bis 1079 nm (Nanometer), bevorzugt von 1064 nm. Weiterhin wird ein Yb:YAG-Laser (Ytterbium-dotierter Yttrium-Aluminium-Granat-Festkörperlaser) mit einer Wellenlänge im Bereich von 1030 nm bevorzugt. Beide Lasertypen können auch mit einer Frequenzverdopplung (gedoppelt) oder einer Frequenzverdreifachung (getrippelt) bevorzugt verwendet werden.

YAG-Laser werden erfindungsgemäß insbesondere mit einer hohen Pulsfrequenz im Pico- und Nanosekundenbereich zum Entschichten der funktionellen Beschichtung verwendet. Die Entschichtungsqualität ist sehr gut und die funktionelle Beschichtung ist im Wesentlichen vollständig entfernt. Insbesondere bei Verwendung eines Glas-substrats als erste Scheibe ist die Oberfläche frei von Mikrorissen und zeigt eine niedrige optische Streuung sowie hohe Festigkeitswerten im 2-Punkt-Biegeversuch.

Alternative sind für die Entschichtung der funktionellen Beschichtung CO₂-Laser besonders geeignet, insbesondere CO₂-Laser mit einer Wellenlänge im Bereich von 9,2 µm bis 11,4 µm, bevorzugt von 10,6 µm oder einem frequenzgedoppelten CO₂-Laser. Dies kann ein gepulster CO₂-Laser oder ein Dauerstrich-CO₂-Laser (cw-Laser, continuous-wave laser) sein.

Für die Durchführung des erfindungsgemäßen Verfahrens ist bei Verwendung eines CO₂-Lasers insbesondere im Hinblick auf die Entschichtungsgeschwindigkeit eine mittlere Laserleistung PAV von kleiner 500 W, bevorzugt von kleiner 300 W, besonders bevorzugt von kleiner 200 W geeignet. In Bezug auf die Entschichtungsqualität ist eine mittlere Laserleistung von kleiner 100 W bevorzugt, welche für die Ausbildung einer guten Entschichtungsqualität förderlich ist, aber die Entschichtungsgeschwindigkeit ist dabei gering.

Für die Durchführung des erfindungsgemäßen Verfahrens wird bei Verwendung eines gepulsten CO₂-Lasers eine mittlere Laserpulsfrequenz fᵣₑₚ von 5 bis 12 kHz (Kilohertz) bevorzugt, insbesondere eine mittlere Laserpulsfrequenz fᵣₑₚ von 8 bis 10 kHz. Weiterhin wird bei Verwendung eines gepulsten CO₂-Lasers eine Laserpulsdauer tₚ von 0,1 bis 500 µs (Mikrosekunden) bevorzugt, insbesondere eine Laserpulsdauer tₚ von 1 bis 100 µs.

Weiterhin wird ein Excimer-Laser, insbesondere ein F₂-Laser (157 nm), ArF-Laser (193 nm), KrF-Laser (248 nm) oder ein Ar-Laser (351 nm) bevorzugt. Solche Lasertypen können je nach Ausführungsform der Erfindung als gepulst oder kontinuierlich (continuous wave) arbeitende Laser eingesetzt werden.

In einer vorteilhaften Ausführungsform des erfindungsgemäßen Verfahrens wird in Schritt (b) zur Laserabtragung ein Laserstrahl unmittelbar auf die beschichtete Oberfläche III der ersten Scheibe gelenkt. Dies hat den Vorteil, dass ein Schneidewerkzeug zum Schneiden der ersten Scheibe aus einer größeren Basisscheibe neben dem Laser angeordnet sein kann, was die Vorrichtung zur Herstellung der erfindungsgemäßen Verbundscheibe deutlich vereinfacht. In einer alternativen vorteilhaften Ausführungsform des erfindungsgemäßen Verfahrens wird in Schritt (b) zur Laserabtragung ein Laserstrahl durch die der beschichteten Oberfläche III der erste Scheibe abgewandte Oberfläche in die erste Scheibe eingekoppelt und somit durch die erste Scheibe hindurch auf die funktionelle Beschichtung geführt. Dies hat den besonderen Vorteil, dass abgetragenes oder verdampftes Material nicht in den Weg des Laser-strahls gelangen kann und diesen somit nicht ablenken, streuen oder dämpfen kann. Daraus resultiert eine höhere Genauigkeit im Abtragungsprozess.

In Verfahrensschritt (c) wird die erste Scheibe so angeordnet, dass diejenige ihrer Oberflächen, welche mit der funktionellen Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere Zwischenschichten, die flächenmäßig übereinander angeordnet werden, ausgebildet werden.

Das Verbinden von erster und zweiter Scheibe in Verfahrensschritt (c) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40°C bis 150°C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung umfasst weiter die Verwendung der erfindungsgemäßen Verbundscheibe mit funktioneller Beschichtung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine Draufsicht auf eine Ausgestaltung einer erfindungsgemäßen Verbundscheibe mit funktioneller Beschichtung;
- Figur 1B: eine Querschnittsdarstellung entlang der Schnittlinie B-B' der erfindungsgemäßen Verbundscheibe aus Figur 1A;
- Figur 2A: eine Draufsicht auf eine Verbundscheibe nach dem Stand der Technik;
- Figur 2B: eine Querschnittsdarstellung entlang der Schnittlinie A-A' der Verbundscheibe aus Figur 2A;
- Figur 3A: eine Draufsicht auf eine weitere Ausgestaltung der erfindungsgemäßen Verbundscheibe mit funktioneller Beschichtung;
- Figur 3B: eine Querschnittsdarstellung entlang der Schnittlinie B-B' der erfindungsgemäßen Verbundscheibe aus Figur 3A;
- Figur 4A: eine Draufsicht auf eine weitere Ausgestaltung der erfindungsgemäßen Verbundscheibe mit funktioneller Beschichtung;
- Figur 4B: eine Querschnittsdarstellung entlang der Schnittlinie C-C' der erfindungsgemäßen Verbundscheibe aus Figur 4A;
- Figur 5A: eine Draufsicht auf eine weitere Ausgestaltung der erfindungsgemäßen Verbundscheibe mit funktioneller Beschichtung;
- Figur 5B: eine Querschnittsdarstellung entlang der Schnittlinie D-D' der erfindungsgemäßen Verbundscheibe aus Figur 5A;
- Figur 6A-D: eine Querschnittsdarstellung der erfindungsgemäßen Verbundscheibe während des erfindungsgemäßen Verfahrens;
- Figur 7: ein detailliertes Flussdiagramm einer Ausführungsform des erfindungsgemäßen Verfahrens;
- Figur 8A: eine perspektivische Ansicht einer schematischen Darstellung einer erfindungsgemäßen Vorrichtung zu Durchführung des erfindungsgemäßen Verfahrens und
- Figur 8B: eine Querschnittsdarstellung entlang der Schnittlinie E-E' einer Basisscheibe 1' aus Figur 8A.

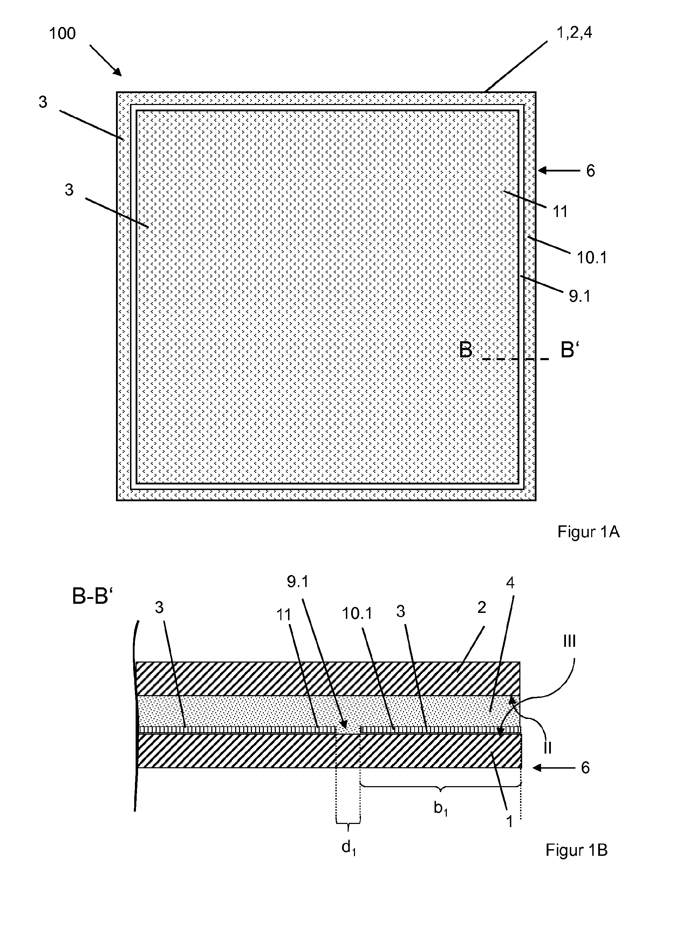

Figur 1A zeigt eine Draufsicht auf eine beispielhafte Ausgestaltung einer erfindungsgemäßen Verbundscheibe 100 mit funktioneller Beschichtung 3. Figur 1B zeigt eine Querschnittsdarstellung entlang der Schnittlinie B-B' der erfindungsgemäßen Verbundscheibe 100 aus Figur 1A. Die Verbundscheibe 100 umfasst eine erste Scheibe 1, eine zweite Scheibe 2 und eine thermoplastische Zwischenschicht 4, die die Oberfläche III der ersten Scheibe 1 mit der Oberfläche II der zweiten Scheibe 2 flächig verbindet. Die erste Scheibe 1 und die zweite Scheibe 2 bestehen beispielsweise aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht beispielsweise aus Polyvinylbutyral (PVB) und weist eine Dicke von 0,76 mm auf. Die Abmessungen der Verbundscheibe 100 betragen beispielsweise 1 m x 1 m.

Auf der Oberfläche III der ersten Scheibe 1 ist eine funktionelle Beschichtung 3 aus einer transparenten elektrisch leitfähigen Beschichtung aufgebracht, die beispielsweise als infrarotreflektierende Schicht oder als elektrische Heizschicht dienen kann. Die funktionelle Beschichtung 3 ist ein Schichtensystem, welches beispielsweise drei elektrisch leitfähige Silberschichten enthält, die durch dielektrische Schichten voneinander getrennt sind.

Die funktionelle Beschichtung 3 erstreckt sich beispielsweise über die gesamte Oberfläche III der ersten Scheibe 1 abzüglich eines rahmenförmig umlaufenden beschichtungsfreien Bereich 9.1, der einen inneren Bereich 11 der funktionellen Beschichtung 3 vollständig von einem äußeren Bereich 10.1 der funktionellen Beschichtung 3 abtrennt. Dies bedeutet, dass der innere Bereich 11 nicht an eine Seitenkante 6 der ersten Scheibe 1 grenzt. Im hier dargestellten Beispiel weißt der rahmenförmig umlaufende beschichtungsfreie Bereich 9.1 die Form einer rechteckigen und hier quadratisch ausgeführten entschichteten Linie mit einer Breite d₁ auf, die über den kompletten Umlauf um eine Abstand b₁ von der Seitenkante 6 der Verbundscheibe 100 ins Scheibeninnere zurück versetzt ist. Der Abstand b₁ ist in diesem Fall die Breite des äußeren Bereichs 10.1 und beträgt beispielsweise 5 mm. Die Breite d₁ des beschichtungsfreien Bereichs 9.1 ist beispielsweise konstant und beträgt beispielsweise 300 µm. Durch diese Anordnung wird vermieden, dass der innere Bereich 11 der funktionellen Beschichtung 3 an die Seitenkante 6 der ersten Scheibe 1 grenzt. In der Verbundscheibe 100 wird dadurch vermieden, dass die funktionelle Beschichtung 3 einen direkten Zugang zur Atmosphäre außerhalb der Verbundscheibe 100 erhält. Durch die Lamination der ersten Scheibe 1 und der zweiten Scheibe 2 mit der Zwischenschicht 4 wird der beschichtungsfreie Bereich 9.1 vollständig mit dem Material der Zwischenschicht 4 gefüllt und der innere Bereich 11 hermetisch abgeschlossen. Die funktionelle Beschichtung 3 im inneren Bereich 11 wird dadurch wirksam vor Feuchtigkeit und damit vor Korrosion geschützt. Wie Untersuchungen der Erfinder überraschenderweise ergaben, genügt eine Breite d₁ von bereits 30 µm um die funktionelle Beschichtung 3 im inneren Bereich 11 vor Korrosion zu schützen. Es versteht sich, dass noch weitere Abschnitte der funktionellen Beschichtung 3 innerhalb des inneren Bereichs 11 oder des äußeren Bereichs 10.1 beschichtungsfrei sein können, ohne dass die oben beschriebene erfindungsgemäße Wirkung des Korrosionsschutzes beeinträchtigt wird. Der schmale beschichtungsfreie Bereich 9.1 kann beispielsweise mittels Laserentschichtung der funktionellen Beschichtung 3 hergestellt werden. Dies hat den besonderen Vorteil, dass die erfindungsgemäße Verbundscheibe 100 schnell und kostengünstig hergestellt werden kann.

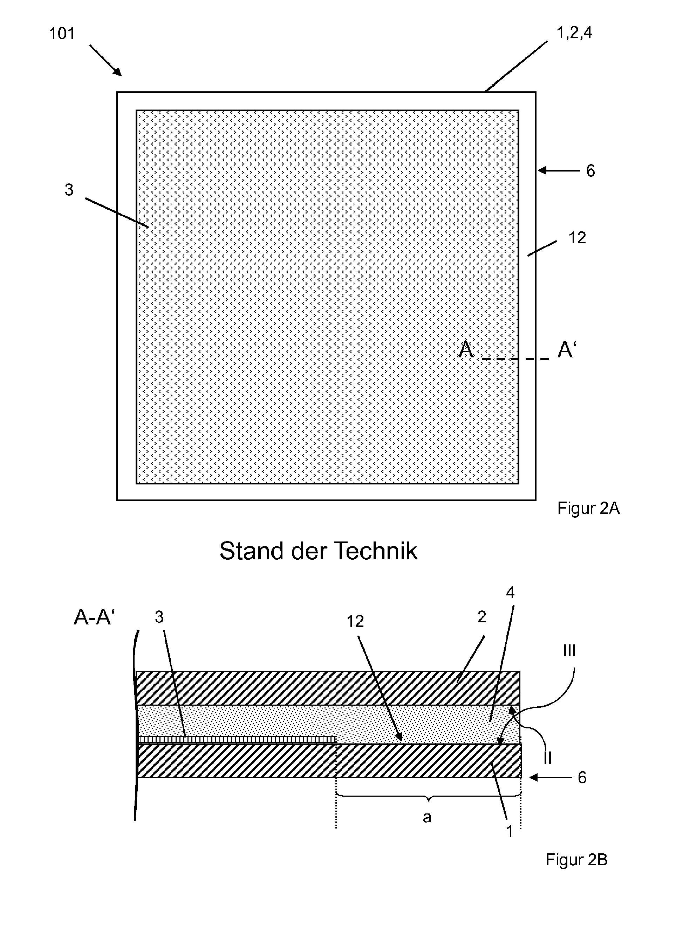

Figur 2A zeigt eine Draufsicht auf eine Verbundscheibe 101 nach dem Stand der Technik. Figur 2B zeigt eine Querschnittsdarstellung entlang der Schnittlinie A-A' der Verbundscheibe aus Figur 2A. Der prinzipielle Aufbau der Verbundscheibe 101 nach dem Stand der Technik entspricht in den Materialien und den Abmessungen der erfindungsgemäßen Verbundscheibe 100 aus Figur 1A und Figur 1B. Die Verbundscheibe 101 nach dem Stand der Technik weißt ebenfalls eine funktionelle Beschichtung 3 auf, die auf der Oberfläche III der ersten Scheibe 1 angeordnet ist.

Im Unterschied zur erfindungsgemäßen Verbundscheibe 100 aus Figur 1A und Figur 1B, ist die Verbundscheibe 101 nach dem Stand der Technik im Randbereich 12 der ersten Scheibe 1 vollständig über eine Breite a von 15 mm bis hin zur Scheibenkante 6 vollständig beschichtungsfrei, beziehungsweise die funktionelle Beschichtung 3 wurde dort entfernt. Das heißt die Verbundscheibe 101 nach dem Stand der Technik weist keinen äußeren Bereich 9.1 aus einer funktionellen Beschichtung 3 auf. Eine derart große Entschichtung im Randbereich wird in der Regel durch mechanisch-abrasive Verfahren hergestellt. Im Vergleich zur erfindungsgemäßen Verbundscheibe 100 ist der Aufwand die funktionelle Beschichtung 3 im Randbereich 12 vollständig zu entfernen sehr aufwendig, langwierig und deshalb sehr kostenintensiv und ästhetisch unattraktiv.

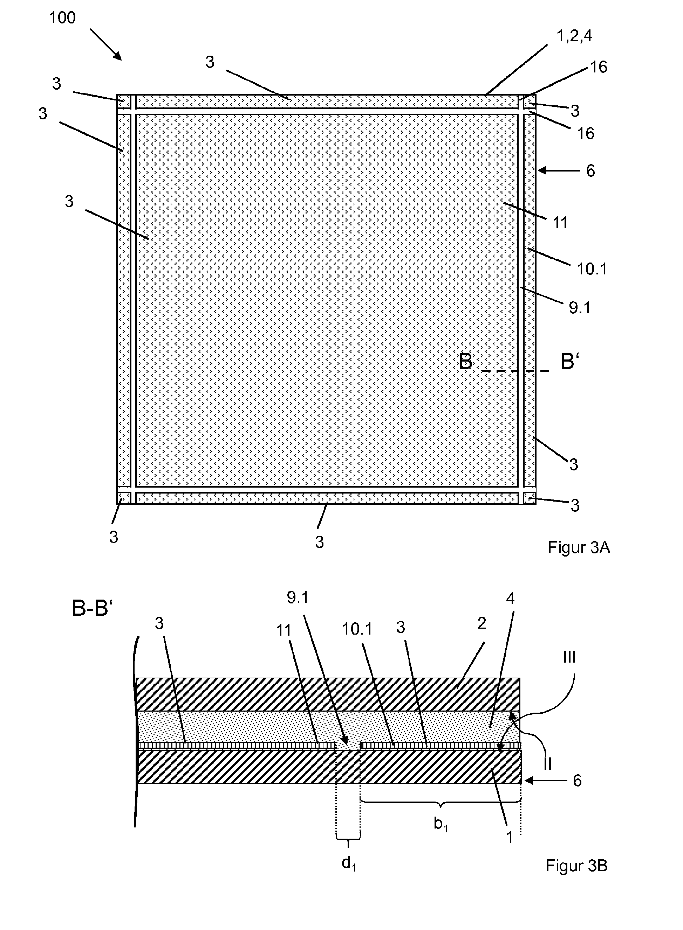

Figur 3A zeigt eine Draufsicht auf eine alternative Ausgestaltung einer erfindungsgemäßen Verbundscheibe 100 mit funktioneller Beschichtung 3. Figur 3B zeigt eine Querschnittsdarstellung entlang der Schnittlinie B-B' der erfindungsgemäßen Verbundscheibe 100 aus Figur 3A. Der Aufbau der Verbundscheibe 100 aus Figur 3A und Figur 3B entspricht im Wesentlichen dem Aufbau der Verbundscheibe 100 aus Figur 1A und 1B, so dass im Folgenden lediglich die Unterschiede zwischen beiden Verbundscheiben 100 beschrieben werden.

Die funktionelle Beschichtung 3 erstreckt sich wie im Beispiels aus Figur 1A ebenfalls über die gesamte Oberfläche III der ersten Scheibe 1 abzüglich eine rahmenförmig umlaufenden beschichtungsfreien Bereich 9.1, der einen inneren Bereich 11 der funktionellen Beschichtung 3 vollständig von einem äußeren Bereich 10.1 der funktionellen Beschichtung 3 abtrennt, so dass der innere Bereich 11 nicht an eine Seitenkante 6 der ersten Scheibe 1 grenzt. Im Unterschied zu Figur 1A ist im Beispiel nach Figur 3A der beschichtungsfreie Bereich 9.1 durch Streifen ausgebildet, die parallel zu den Seitenkanten 6 der ersten Scheibe 1 verlaufen. Diese Streifen überkreuzen sich jeweils in den Eckbereichen der ersten Scheibe 1. Durch die sich überkreuzenden Streifen entsteht ein rahmenförmig umlaufender Bereich der dem beschichtungsfreien Bereich 9.1 entspricht und der die funktionelle Beschichtung 3 vollständig von der Seitenkante 6 der ersten Scheibe 1 abtrennt. Dadurch wird in der fertigen Verbundscheibe 100 die funktionelle Beschichtung 3 im inneren Bereich 11 hermetisch von der Umgebung der Verbundscheibe 100 abgeschlossenen und vor von außen eindringender Feuchtigkeit geschützt. Im Unterschied zum Ausgestaltungsbeispiel nach Figur 1A weist der beschichtungsfreie Bereich 9.1 in Figur 3A Verlängerungselemente 16 auf, die in den Eckbereichen der ersten Scheibe den beschichtungsfreien Bereich 9.1 bis zur Seitenkante 6 verlängern. Da diese ebenfalls nach der Lamination mit der thermoplastischen Zwischenschicht 4 hermetisch versiegelt werden, kann auch hier keine Feuchtigkeit zur funktionellen Beschichtung 3 im inneren Bereich 11 gelangen. Beschichtungsfreie Bereiche 9.1 aus derartigen parallel verlaufende Streifen lassen sich fertigungstechnisch besonders einfach herstellen, beispielsweise durch paralleles Führen eines Entschichtungswerkzeugs für die Entschichtung des beschichtungsfreien Bereichs 9.1, wie einem Laser, zu einem weiteren Werkzeug, dass die erste Scheibe 1 aus einem größeren Basisglas herausschneidet oder zum Abtrennen anritzt.

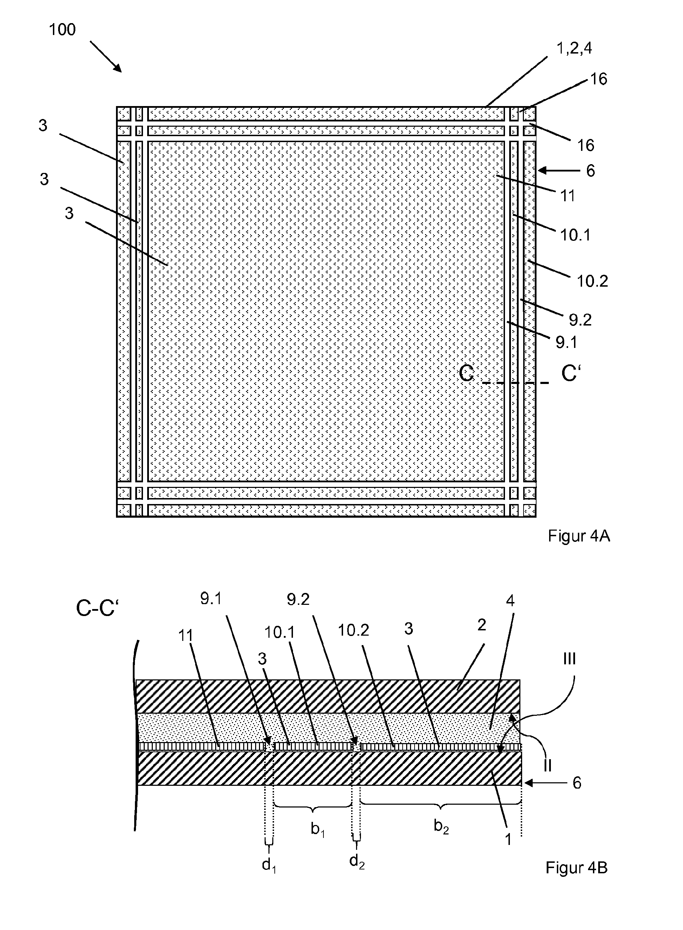

Figur 4A zeigt eine Draufsicht auf eine alternative Ausgestaltung einer erfindungsgemäßen Verbundscheibe 100 mit funktioneller Beschichtung 3. Figur 4B zeigt eine Querschnittsdarstellung entlang der Schnittlinie C-C' der erfindungsgemäßen Verbundscheibe 100 aus Figur 4A. Der Aufbau der Verbundscheibe 100 aus Figur 4A und Figur 4B entspricht im Wesentlichen dem Aufbau der Verbundscheibe 100 aus Figur 3A und 3B, so dass im Folgenden lediglich die Unterschiede zwischen beiden Verbundscheiben 100 beschrieben werden.

Die in diesem Beispiel dargestellte Verbundscheibe 100 weist zusätzlich zum beschichtungsfreien Bereich 9.1 weitere beschichtungsfreie Bereiche 9.2 auf, der von dem beschichtungsfreien Bereich 9.1 rahmenförmig umlaufen wird. Der beschichtungsfreie Bereich 9.2 hat beispielsweise eine Breite d₂ von 100 µm und einen Abstand b₂ vom beschichtungsfreien Bereich 9.1 von 2 mm. Beide beschichtungsfreien Bereiche 9.1,9.2 sind durch parallel zu den Seitenkante 6 der ersten Scheibe 1 verlaufenden Streifen ausgebildet, dich sich in den Ecken der ersten Scheibe 1 jeweils überkreuzen und Verlängerungselemente 12 aufweisen. Dies bedeutet, dass der innere Bereich 11 der funktionellen Beschichtung 3 der ersten Scheibe 1 zumindest durch einen entschichteten Bereich 9.1 der Breite d₁ und einen entschichteten Bereich 9.2 der Breite d₂ von der Seitenkante 6 getrennt sind. Dies führt in der fertigen Verbundscheibe 1 zu einer verbreiterten und damit verbesserten Abtrennung des inneren Bereichs 11 von der die Verbundscheibe 100 umgebenden Atmosphäre und damit zu einem verbesserten Schutz vor Feuchtigkeit und damit vor Korrosion.

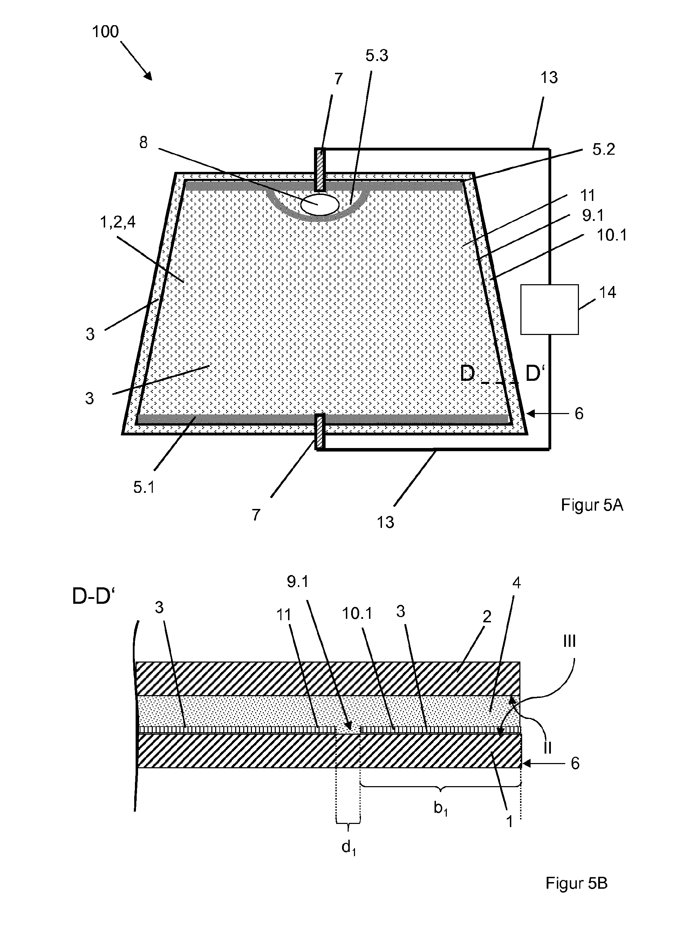

Figur 5A zeigt eine Draufsicht auf eine weitere beispielhafte Ausgestaltung einer erfindungsgemäßen Verbundscheibe 100 mit funktioneller Beschichtung 3 in Form einer elektrischen Heizschicht. Die Verbundscheibe 100 umfasst eine erste Scheibe 1 und eine zweite Scheibe 2, die über eine thermoplastische Zwischenschicht 4 miteinander verbunden sind. Die Verbundscheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine funktionelle Beschichtung 3 aus einer elektrisch leitfähigen Beschichtung aufgebracht, die als elektrische Heizschicht verwendet werden kann. Die funktionelle Beschichtung 3 ist ein Schichtensystem, welches beispielsweise drei elektrisch leitfähige Silberschichten enthält, die durch dielektrische Schichten voneinander getrennt sind. Fließt ein Strom durch diese elektrisch leitfähige funktionelle Beschichtung 3, so wird sie infolge ihres elektrischen Widerstands und joulscher Wärmeentwicklung erwärmt. Die funktionelle Beschichtung 3 kann daher für eine aktive Beheizung der Verbundscheibe 100 verwendet werden.

Die funktionelle Beschichtung 3 erstreckt sich beispielsweise über die gesamte Oberfläche III der ersten Scheibe 1 abzüglich eines umlaufenden rahmenförmigen beschichtungsfreien Bereichs 9.1 mit einer Breite d₁ von 100 µm. Der beschichtungsfreie Bereich 9.1 ist um einen Abstand b₁ von beispielsweise 5 mm von der Scheibenkante 6 ins Scheibeninnere versetzt. Der beschichtungsfreie Bereich 9.1 hat hier zwei technische Aufgaben: er dient der elektrischen Isolierung zwischen der Fahrzeugkarosserie und der spannungsführenden funktionellen Beschichtung 3, wenn diese elektrisch beheizt wird. Des Weiteren wird der beschichtungsfreie Bereich 9.1 durch Verkleben mit der Zwischenschicht 4 hermetisch versiegelt und schützt die funktionelle Beschichtung 3 im inneren Bereich 11 vor Beschädigungen und Feuchtigkeit und damit vor Korrosion.

Zur elektrischen Kontaktierung der als elektrischen Heizschicht dienenden funktionellen Beschichtung 3 ist jeweils ein erster Sammelleiter 5.1 im unteren Randbereich und ein zweiter Sammelleiter 5.2 im oberen Randbereich des inneren Bereichs 11 auf der funktionellen Beschichtung 3 angeordnet. Die Sammelleiter 5.1, 5.2 enthalten beispielsweise Silberpartikel und wurden im Siebdruckverfahren aufgebracht und anschließend eingebrannt. Die Länge der Sammelleiter 5.1, 5.2 entspricht annähernd der Ausdehnung des inneren Bereichs 11 der funktionellen Beschichtung 3.

Wird an die Sammelleiter 5.1 und 5.2 eine elektrische Spannung angelegt, so fließt ein gleichmäßiger Strom durch die elektrisch leitfähige funktionelle Beschichtung 3 zwischen den Sammelleitern 5.1,5.2. Auf jedem Sammelleiter 5.1,5.2 ist ungefähr mittig eine Zuleitung 7 angeordnet. Die Zuleitung 7 ist ein an sich bekannter Folien-leiter. Die Zuleitung 7 ist über eine Kontaktfläche mit dem Sammelleiter 5.1,5.2 elektrisch leitend verbunden, beispielsweise mittels einer Lotmasse, eines elektrisch leitfähigen Klebstoffs oder durch einfaches Aufliegen und Andruck innerhalb der Verbundscheibe 100. Der Folienleiter enthält beispielsweise eine verzinnte Kupferfolie mit einer Breite von 10 mm und einer Dicke von 0,3 mm. Über die elektrischen Zuleitungen 7 sind die Sammelleiter 5.1,5.2 über Verbindungskabel 13 mit einer Spannungsquelle 14 verbunden, welche eine für Kraftfahrzeuge übliche Bordspannung, bevorzugt von 12 V bis 15 V und beispielsweise etwa 14 V bereitstellt. Alternativ kann die Spannungsquelle 14 auch höhere Spannungen aufweisen, beispielsweise von 35 V bis 45 V und insbesondere 42 V.

Es versteht sich, dass die funktionelle Beschichtung 3 neben der Heizfunktion noch weitere Funktionen, wie Infrarotreflexion oder Low-E-Eigenschaften, aufweisen kann.

In der Verbundscheibe 100 ist etwa mittig zur Scheibenbreite eine unbeschichtete Zone 8 angeordnet. Die unbeschichtete Zone 8 weist kein elektrisch leitfähiges Material der funktionellen Beschichtung 3 auf. Die unbeschichtete Zone 8 ist hier beispielsweise vollständig von der funktionellen Beschichtung 3 umgeben. Alternativ kann die unbeschichtete Zone 8 am Rand der funktionellen Beschichtung 3 angeordnet sein. Die Fläche der unbeschichteten Zone 8 beträgt beispielsweise 1,5 dm². Die unbeschichtete Zone 8 grenzt an ihrem unteren Ende an einen zusätzlichen Sammel-leiter 5.3, der die unbeschichtete Zone 8 auf der Unterseite umrandet. Die unbeschichtete Zone 8 dient beispielsweise als Kommunikations-, Sensor- oder Kamerafenster.

Die Sammelleiter 5.1,5.2,5.3 haben im dargestellten Beispiel eine konstante Dicke von beispielsweise etwa 10 µm und einen konstanten spezifische Widerstand von beispielsweise 2.3 µOhm•cm.

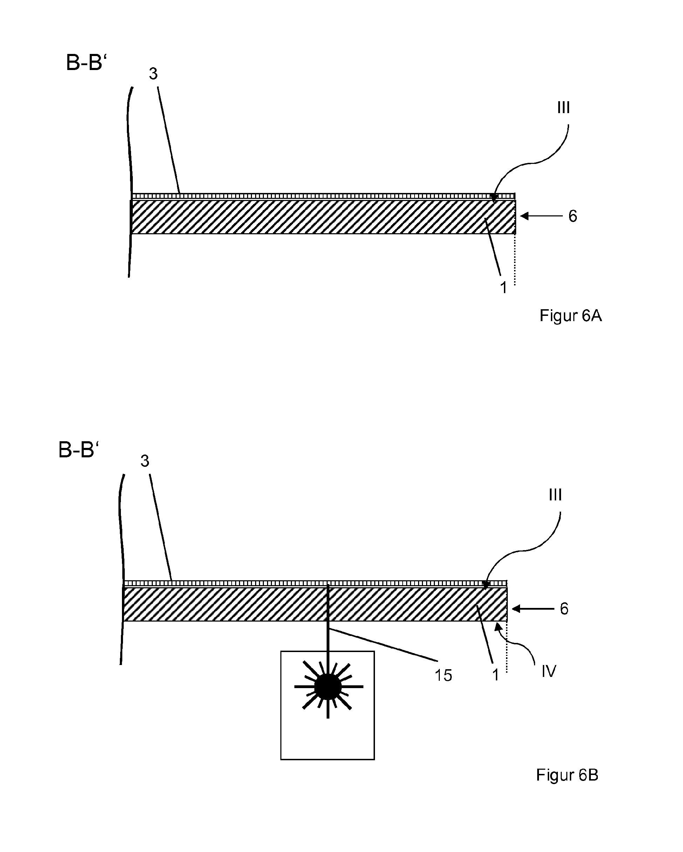

Die Figuren 6A bis 6D zeigen eine Querschnittsdarstellung entlang der Schnittlinie B-B' der erfindungsgemäßen Verbundscheibe 100 aus Figur 1A während des erfindungsgemäßen Verfahrens zur Herstellung der Verbundscheibe 100.

Figur 6A zeigt eine erste Scheibe 1 mit einer erfindungsgemäßen funktionellen Beschichtung 3. Figur 6B zeigt schematisch die Laserstrukturierung der funktionellen Beschichtung 3 durch einen Laserstrahl 15. Der Laserstrahl 15 tritt in diesem Beispiel über die der funktionellen Beschichtung 3 abgewandten Oberfläche IV in die erste Scheibe 1 ein und trifft durch die erste Scheibe 1 hindurch auf die funktionelle Beschichtung 3. Dies hat den besonderen Vorteil, dass verdampftes oder abgetragenes Material der funktionellen Beschichtung 3 sich frei wegbewegen kann ohne den Laserstrahl 15 und den weiteren Verdampfungs- oder Abtragungsprozess zu stören. Dies ermöglicht ein besonders schnelles und präzises Laserentschichten.

Es versteht sich, dass zur Durchführung des erfindungsgemäßen Verfahrens der Laserstrahl zur Laserabtragung auch unmittelbar auf die beschichtete Oberfläche III der ersten Scheibe gelenkt werden kann, das heißt, das der Laserstrahl direkt auf die funktionelle Beschichtung 3 trifft und nicht durch die erste Scheibe 1 geführt wird.

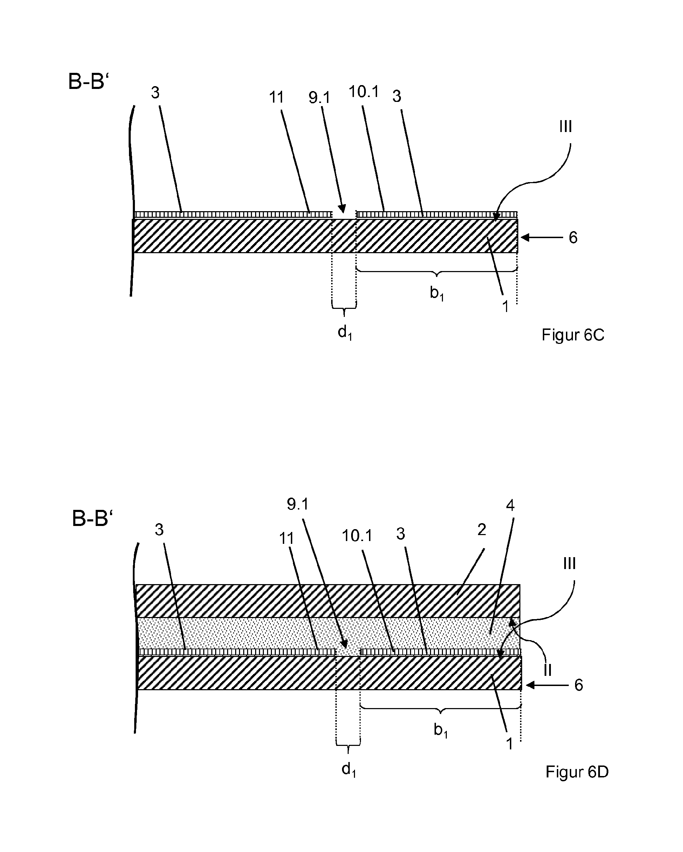

Figur 6C zeigt das Ergebnis der Laserentschichten. In einem beschichtungsfreien Bereich 9.1 ist die funktionelle Beschichtung 3 vollständig über eine Breite d₁ entfernt. Die funktionelle Beschichtung 3 ist dadurch in einen inneren Bereich 11 und einen äußeren Bereich 10.1 unterteilt. Das bedeutet, dass es keine eine stoffliche Verbindung des Materials der funktionellen Beschichtung 3 des inneren Bereichs 11 mit dem des äußeren Bereich 10.1 mehr gibt.

Anschließend wird die erste Scheibe 1 über eine thermoplastischen Zwischenschicht 4 mit einer zweiten Scheibe 2 durch übliche Laminierungsprozesse verbunden, beispielsweise im Autoklaven. Figur 6D zeigt die laminierte erfindungsgemäße Verbundscheibe 100.

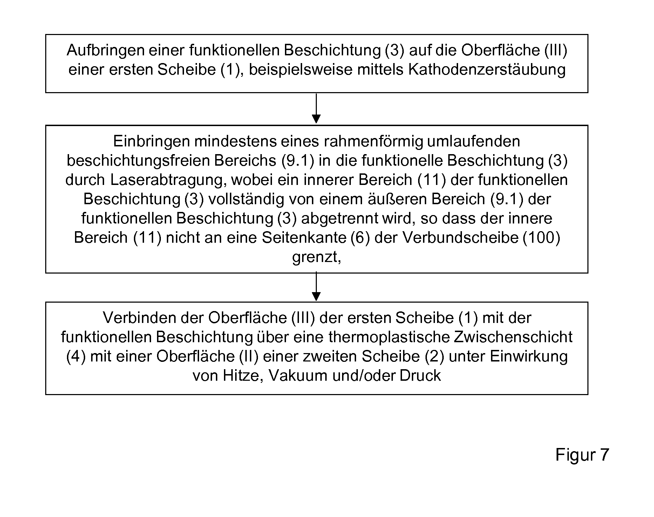

Figur 7 zeigt ein Flussdiagramm eines Ausführungsbeispiels des erfindungsgemäßen Verfahrens zur Herstellung einer erfindungsgemäßen Verbundscheibe 100 mit funktioneller Beschichtung.

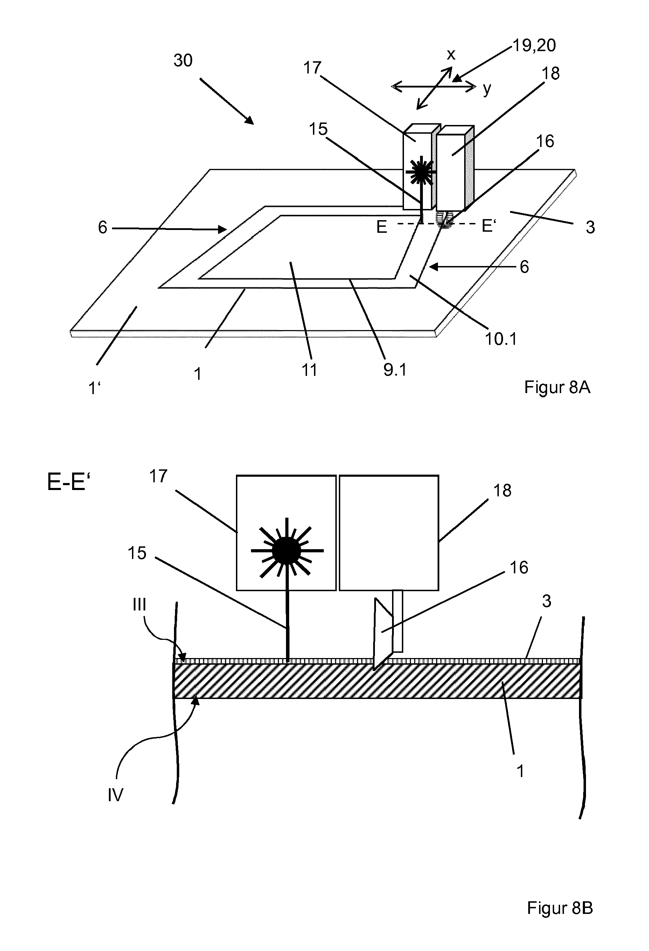

Figur 8A zeigt eine perspektivische Ansicht einer schematischen Darstellung einer erfindungsgemäßen Vorrichtung 30 zu Durchführung des erfindungsgemäßen Verfahrens. Die Vorrichtung 30 umfasst ein Schneidewerkzeug 18 zum Herausschneiden einer ersten Scheibe 1 aus einer größeren Scheibe, die im folgenden Basisscheibe 1' genannt wird. Auf der Basisscheibe 1' ist eine funktionelle Beschichtung 3 angeordnet.

Figur 8B zeigt eine Querschnittsdarstellung der erfindungsgemäßen Vorrichtung 30 aus Figur 8A entlang einer Schnittebene, die parallel zur Schnittlinie E-E' und orthogonal zur Basisscheibe 1' verläuft.

Das Schneidewerkzeug 18 ist in diesem Beispiel ein Schneiderad 16 aus einem Hartmetall. Es versteht sich, dass auch andere Schneidewerkzeuge 18 wie eine Diamantnadel oder ein Laser verwendet werden können. Ebenso versteht es sich, dass das Schneidewerkzeug 18 bei einer Basisscheibe 1' aus Glas, diese nur anschneidet oder anritzt und die erste Scheibe 1 im Anschluss, beispielsweise durch eine geringe mechanische Belastung, aus der Basisscheibe 1' herausbricht.

Des Weiteren umfasst die Vorrichtung 30 ein Entschichtungswerkzeug 17 zum Einbringen eines beschichtungsfreien Bereichs 9.1 in die funktionelle Beschichtung 3. Das Entschichtungswerkzeug 17 ist in diesem Beispiel ein Laserstrahl 15. Der Laserstrahl 15 wird auf die funktionelle Beschichtung 3 auf der Oberfläche III der Basisscheibe 1' geführt. Dort wird die funktionelle Beschichtung 3 unter Einwirkung des Laserstrahls 15 abgetragen, beispielsweise durch Verdampfen.

Es versteht sich, dass das Entschichtungswerkzeug 17 auch ein Schleifrad oder ein anders geeignetes Werkzeug sein kann. Ebenso, kann das Entschichtungswerkzeug und insbesondere der Laser auf der anderen Seite der Basisscheibe 1' angeordnet sein, so dass der Laserstrahl 15 durch die erste Scheibe 1 hindurch geführt wird und erst dann auf die funktionelle Beschichtung 3 trifft. Diese Anordnung hat den besonderen Vorteil, dass abgedampftes Material der funktionellen Beschichtung 3 nicht in den Weg des Laserstrahls 15 gelangen kann, so dass dieser nicht gestreut und nicht abgeschwächt wird, und eine höhere Strukturierungsgenauigkeit erzielt wird.

Die erfindungsgemäße Vorrichtung 30 umfasst des Weiteren eine Verfahreinrichtung 19 mit der das Schneidewerkzeug 18 und das Entschichtungswerkzeug 17 bewegt werden können. In diesem Beispiel ist die Verfahreinrichtung 19 ein X-Y-Verfahrtisch 20, der die Werkzeuge 18,19 simultan in Ebene der Basisscheibe 1' verschiebt. Als Verfahreinrichtung 19 kann auch jede andere geeignete Einrichtung verwendet werden, beispielsweise ein Mehr-Achsen-Handhabungsgerät oder ein Roboter.

Die erfindungsgemäßen Verbundscheiben 100 wurden üblichen Korrosionstest unterzogen:
a) einem Feuchtigkeitstest bei einer Temperatur von 70°C und einer relativen Luftfeuchtigkeit von 100 % für eine Dauer von 300 Stunden;
b) einem Klimawechseltest mit 20 Zyklen von jeweils 12 Stunden Dauer bei einer relativen Luftfeuchtigkeit von 85% und einem Temperaturwechsel von 85°C auf -40°C; sowie
c) einem Salzsprühtest bei einer Temperatur von 35°C über 960 Stunden mit einer wässrigen Natriumchlorid-Lösung.

Alle erfindungsgemäßen Verbundscheiben 100 zeigten eine sehr gute Korrosionsbeständigkeit in den oben genannten Korrosionstests.

Die erfindungsgemäße Verbundscheibe 100 nach den Figuren 1 und 3-5 weist durch die stoffliche Unterteilung der funktionellen Beschichtung 3 durch beschichtungsfreie Bereiche 9.1,9.2 sehr gute Korrosionseigenschaften auf. Durch die geringe Breite d_{1/2} der beschichtungsfreien Bereiche 9.1,9.2 lassen sich diese schneller und kostengünstiger Herstellen als vergleichsweise große beschichtungsfreie Randbereiche 12 nach dem Stand der Technik. Dieses Ergebnis war für den Fachmann unerwartet und überraschend.

### Bezugszeichenliste:

- 1: erste Scheibe
- 1': Basisglasscheibe
- 2: zweite Scheibe
- 3: funktionelle Beschichtung
- 4: thermoplastische Zwischenschicht
- 5.1,5.2,5.3: Sammelleiter
- 6: Seitenkante der erste Scheibe 1
- 7: Zuleitung
- 8: unbeschichtete Zone, Kommunikationsfenster
- 9.1,9.2: beschichtungsfreier Bereich
- 10.1,10.2: äußerer Bereich
- 11: innerer Bereich
- 12: beschichtungsfreier Randbereich nach dem Stand der Technik
- 13: Verbindungskabel
- 14: Spannungsquelle
- 15: Laserstrahl
- 16: Schneidrad
- 17: Entschichtungswerkzeug
- 18: Schneidewerkzeug
- 19: Verfahreinrichtung
- 20: X-Y-Verfahrtisch
- 30: Vorrichtung
- 100: erfindungsgemäße Verbundscheibe
- 101: Verbundscheibe nach dem Stand der Technik

- II: Oberfläche der zweiten Scheibe 2
- III: innenliegende Oberfläche der ersten Scheibe 1
- IV: außenliegende Oberfläche der ersten Scheibe 1

- A-A', B-B', C-C', D-D', E-E': Schnittlinie
- a: Breite des Randbereichs 12 nach dem Stand der Technik
- b₁, b₂: Breite des äußeren Bereichs 10.1,10.2
- d₁, d₂: Breite des beschichtungsfreien Bereichs 9.1,9.2

## Patentansprüche

1. Verbundscheibe (100) mit funktioneller Beschichtung (3), mindestens umfassend:
- eine erste Scheibe (1) mit einer Oberfläche (III), eine zweite Scheibe (2) mit einer Oberfläche (II) und eine thermoplastische Zwischenschicht (4), wobei die Oberfläche (III) der ersten Scheibe (1) durch die thermoplastische Zwischenschicht (4) mit der Oberfläche (II) der zweiten Scheibe (2) flächig verbunden ist,
- mindestens eine funktionelle Beschichtung (3), die zumindest auf einem Teil der innenliegenden Oberfläche (III) der ersten Scheibe (1) aufgebracht ist und
- mindestens einen beschichtungsfreien Bereich (9.1,9.2), der einen inneren Bereich (11) der funktionellen Beschichtung (3) vollständig umgibt und den inneren Bereich (11) von mindestens einem äußeren Bereich (10.1,10.2) der funktionellen Beschichtung (3) abtrennt.

2. Verbundscheibe (100) nach Anspruch 1, wobei der beschichtungsfreie Bereich (9.1,9.2) streifenförmig und im Wesentlichen parallel zu den Seitenkanten (6) der ersten Scheibe (1) angeordnet ist.

3. Verbundscheibe (100) nach Anspruch 1 oder Anspruch 2, wobei die Breite d_{1/2} des beschichtungsfreien Bereichs (9.1,9.2) von 30 µm bis 5 mm, bevorzugt von 100 µm bis 2 mm, besonders bevorzugt von 250 µm bis 1,5 mm und insbesondere von 250 µm bis 500 µm beträgt.

4. Verbundscheibe (100) nach einem der Ansprüche 1 bis 3, wobei der beschichtungsfreie Bereich (9.1,9.2) durch Laserabtragung entschichtet ist.

5. Verbundscheibe (100) nach einem der Ansprüche 1 bis 4, wobei Breite b_{1/2} des äußeren Bereiches (10.1,10.2) von 0,5 mm bis 30 mm und bevorzugt von 3 mm bis 11 mm beträgt.

6. Verbundscheibe (100) nach einem der Ansprüche 1 bis 5, wobei ein erster beschichtungsfreier Bereich (9.1) vollständig von einem zweiten beschichtungsfreien Bereich (9.2) und bevorzugt der zweite beschichtungsfreie Bereich (9.2) vollständig von einem dritten beschichtungsfreien Bereich, umrandet ist.

7. Verbundscheibe (100) nach einem der Ansprüche 1 bis 6, wobei die erste Scheibe (1) und/oder die zweite Scheibe (2) Glas, bevorzugt Flachglas, Float-glas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

8. Verbundscheibe (100) nach einem der Ansprüche 1 bis 7, wobei die funktionelle Beschichtung (3) Silber (Ag), Indium-Zinnoxid (ITO), fluordotiertes Zinnoxid (SnO₂:F) oder aluminiumdotiertes Zinkoxid (ZnO:Al) enthält.

9. Verbundscheibe (100) nach einem der Ansprüche 1 bis 8, wobei die funktionelle Beschichtung (3) eine transparente, elektrisch leitfähige Beschichtung ist.

10. Verbundscheibe (100) nach Anspruch 9, wobei mindestens zwei zum Anschluss an eine Spannungsquelle (14) vorgesehene Sammelleiter (5.1,5.2) mit der funktionellen Beschichtung (3) im inneren Bereich (11) so verbunden sind, dass zwischen den Sammelleitern (5.1,5.2) ein Strompfad (11) für einen Heizstrom geformt ist.

11. Verbundscheibe (100) nach einem der Ansprüche 1 bis 10, wobei die Fläche des inneren Bereichs (11) größer oder gleich 70%, bevorzugt größer oder gleich 90% der Fläche der funktionellen Beschichtung (3) auf der Oberfläche (III) der ersten Scheibe (1) ist.

12. Verfahren zur Herstellung einer Verbundscheibe (100) mit funktioneller Beschichtung (3), wobei mindestens:
(a) eine funktionellen Beschichtung (3) zumindest auf einen Teil einer Oberfläche (III) einer ersten Scheibe (1) aufgebracht wird,
(b) mindestens ein rahmenförmig umlaufender beschichtungsfreier Bereich (9.1,9.2), bevorzugt durch Laserabtragung, in die funktionelle Beschichtung (3) eingebracht wird, der einen inneren Bereich (11) vollständig umgibt, wobei der innere Bereich (11) der funktionellen Beschichtung (3) vollständig von mindestens einem äußeren Bereich (10.1,10.2) der funktionellen Beschichtung (3) abgetrennt wird,
(c) die Oberfläche (III) der ersten Scheibe (1) mit der funktionellen Beschichtung (3) über eine thermoplastische Zwischenschicht (4) mit einer Oberfläche (II) einer zweiten Scheibe (2) verbunden wird.

13. Verfahren nach Anspruch 12, wobei während des Schritts (b) die erste Scheibe (1) aus einer Basisscheibe herausgeschnitten wird und bevorzugt zeit-gleich mit der Laserabtragung.

14. Verwendung der Verbundscheibe (100) nach einen der Ansprüche 1 bis 11 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper.
